# EUROPEAN PATENT APPLICATION

(11) **EP 2 083 351 A1**
(43) Date of publication of application: **29.07.2009**
(21) Application number: 09151185.7
(22) Date of filing: 23.01.2009
(51) Int. Cl.: G06F 3/12

(54) **On-demand print driver**

(30) Priority: 24.01.2008 US 19610
(71) Applicant: Ricoh Company, Ltd., Tokyo 143-8555 (JP)
(72) Inventor: Selvaraj, Senthil K. c/o RICOH AMERICAS CORPORATION, Cupertino, CA 95014 (US); Xiao, Zhenning c/o RICOH AMERICAS CORPORATION, Cupertino, CA 95014 (US)
(74) Representative: Schwabe - Sandmair - Marx

(57) **Abstract**

An on-demand print driver application (218) queries a printing device (204, 206, 208) for configuration data that specifies current capabilities of the printing device. The on-demand print driver application generates a print driver data file (230) based upon both a set of basic capabilities common to multiple printing devices and the current capabilities of the printing device. The on-demand print driver application generates a print driver (222) for the printing device that includes at least the print driver data file, a UI module (226) and a rendering module (228). The UI module is configured to use the print driver data file to generate a graphical user interface (214) that allows a user to select printing options and settings. The rendering module is configured to use the print driver data file to process application data generated by an application program (216), such as a word processor, and generate print data that conforms to a format supported by the printing device.

## Description

### FIELD OF THE INVENTION

This invention relates to print drivers.

### BACKGROUND OF THE INVENTION

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Generally speaking, print drivers are processes that process print data generated by an application program and convert the print data into a format supported by a printing device that is intended to process the print data. For example, a user creates an electronic document using a word processing application. The user then selects a print option in the application program to request that the electronic document be printed to a particular printing device. The application program generates and provides print data to a print driver installed on the user's client device. Sometimes this involves the use of an intermediary process referred to as a spooler which saves the print data locally. The print driver processes the print data and generates translated print data that is in a format supported by the particular printing device. For example, the print driver may process the print data and generate translated print data that conforms to the postscript format. The print driver then transmits the translated print data to the particular printing device. The particular printing device processes the translated print data and generates a printed version of the electronic document.

Conventional print drivers are printing device specific. That is, each print driver is designed to translate print data into a format that conforms to a particular format supported by a particular printing device. The device-specific nature of print drivers is the reason for several drawbacks. One issue is that a print driver for each printing device that a user is interested in using must be installed on a user's client device. Print drivers are usually provided on storage media when a printing device is purchased and may also be downloaded over the Internet. When a user travels to a different location the user may not know what printing devices are available to the user or the capabilities of the available printing devices and in many cases does not have the correct driver or access to the Internet to download a correct print driver. Users typically must inquire as to the available printing devices and their capabilities and also must acquire, install and configure the necessary print drivers. These problems can be exacerbated when users are using small portable devices with limited user interfaces because downloading, installing and configuring print drivers can be more difficult with these types of limited devices. Another problem is that if the features or capabilities of a printing device change, then all the instances of drivers for that printing device must also be updated to enable those features or capabilities to be used, which can be a difficult and time consuming process.

### SUMMARY OF THE INVENTION

An on-demand print driver application is configured to generate print drivers on-demand, based upon the current capabilities of a printing device. The on-demand print driver application queries a printing device for configuration data that specifies current capabilities of the printing device. The current capabilities may include functionality supported by the printing device and any currently-installed options. According to one embodiment of the invention, the configuration data may include metadata, print configuration data, print capabilities data and extensions data. The on-demand print driver application receives the configuration data from the printing device and generates a print driver data file based upon both a set of basic capabilities common to multiple printing devices and the current capabilities of the printing device specified in the configuration data. For example, the basic capabilities may include basic functionality and printing options that are common to multiple printing devices. The on-demand print driver application generates a print driver for the printing device that includes at least the print driver data file, a UI module and a rendering module. The UI module is configured to use the print driver data file to generate a graphical user interface that allows a user to select printing options and settings. The rendering module is configured to use the print driver data file to process application data generated by an application program, such as a word processor, and generate print data that conforms to a format supported by the printing device. The UI module and the rendering module may be common to and used with multiple printing devices, with the particular functionality or extensions supported by the particular printing device being reflected in the print driver data file. The print driver may be stored in a print driver repository and/or installed on a client device. The on-demand print driver application allows a print driver to be generated on-demand, at any time, based upon the current capabilities of the printing device.

According to one embodiment of the invention, a computer-implemented method is provided for generating a print driver. An on-demand print driver application queries a printing device for configuration data that specifies current capabilities of the printing device. The on-demand print driver application receiving the configuration data from the printing device. The on-demand print driver application generates a print driver data file based upon both a specified set of common printing device capabilities that are common to multiple printing devices and the current capabilities of the printing device specified by the configuration data. The on-demand print driver application generates a print driver for the printing device that includes the print driver data file, a user interface module and a rendering module, wherein both the user interface module and the rendering module are common to the multiple printing devices.

### BRIEF DESCRIPTION OF THE DRAWINGS

In the figures of the accompanying drawings like reference numerals refer to similar elements.

FIG. 1 is a flow diagram that depicts a high level approach for generating a print driver using an on-demand print driver application, according to one embodiment of the invention.

FIG. 2 is a block diagram that depicts an example on-demand print driver architecture, according to an embodiment of the invention.

FIG. 3 is a state diagram that depicts an approach for generating and installing a print driver using an on-demand print driver application in the context of a windows-based operating system, according to one embodiment of the invention.

FIG. 4 is a block diagram that depicts an example implementation of an on-demand print driver application according to one embodiment of the invention.

FIG. 5 is a flow diagram that depicts some of the functions performed by the print driver package creation module according to one embodiment of the invention.

FIG. 6 is a flow diagram that depicts example functionality of the printing device query module in the context of using Web services to obtain the configuration data.

FIG. 7 is a flow diagram that depicts an approach for creating an INF file, according to one embodiment of the invention.

FIG. 8 is a flow diagram that depicts an approach for creating a print driver data file, according to one embodiment of the invention.

FIG. 9 is a block diagram of a computer system on which embodiments of the invention may be implemented.

### DETAILED DESCRIPTION OF THE PRESENT INVENTION

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. ON-DEMAND PRINT DRIVER ARCHITECTURE
III. FUNCTIONAL OVERVIEW
IV. ON-DEMAND PRINT DRIVER APPLICATION
A. Print Driver Package Creation Module
B. Printing Device Query Module
C. INF File Creation Module
D. Print Driver Data (GPD) File Creation Module
V. IMPLEMENTATION MECHANISMS

### I. OVERVIEW

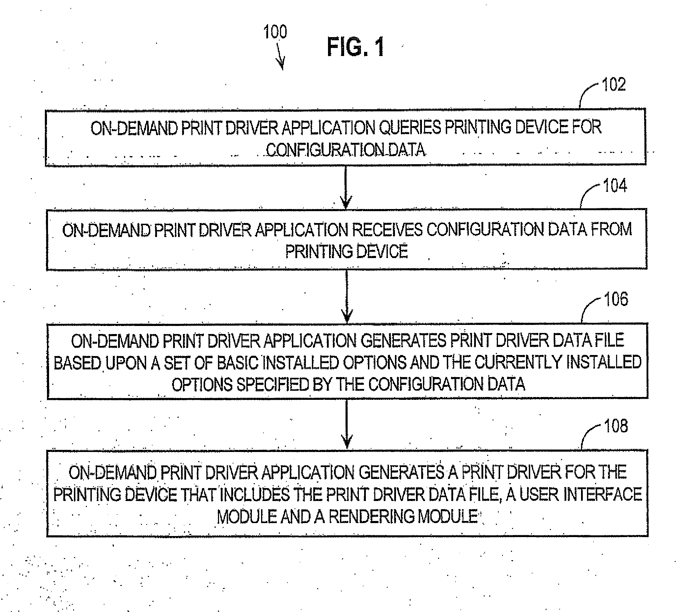

An on-demand print driver application is configured to generate print drivers on-demand, based upon the current capabilities of a printing device. FIG. 1 is a flow diagram that depicts a high level approach for generating a print driver using an on-demand print driver application, according to one embodiment of the invention. In step 102, the on-demand print driver application queries a printing device for configuration data that specifies current capabilities of the printing device. The current capabilities may include functionality supported by the printing device and any currently-installed options. According to one embodiment of the invention, the configuration data may include metadata, print configuration data, print capabilities data and extensions data. In step 104, the on-demand print driver application receives the configuration data from the printing device. In step 106, the on-demand print driver application generates a print driver data file based upon both a set of basic capabilities common to multiple printing devices and the current capabilities of the printing device specified in the configuration data. For example, the basic capabilities may include basic functionality and printing options that are common to multiple printing devices. In step 108, the on-demand print driver application generates a print driver for the printing device that includes at least the print driver data file, a UI module and a rendering module. The UI module is configured to use the print driver data file to generate a graphical user interface that allows a user to select printing options and settings. The rendering module is configured to use the print driver data file to process application data generated by an application program, such as a word processor, and generate print data that conforms to a format supported by the printing device. The UI module and the rendering module may be common to and used with multiple printing devices, with the particular functionality or extensions supported by the particular printing device being reflected in the print driver data file. The print driver may be stored in a print driver repository and/or installed on a client device. The on-demand print driver application allows a print driver to be generated on-demand, at any time, based upon the current capabilities of the printing device.

### II. ON-DEMAND PRINT DRIVER ARCHITECTURE

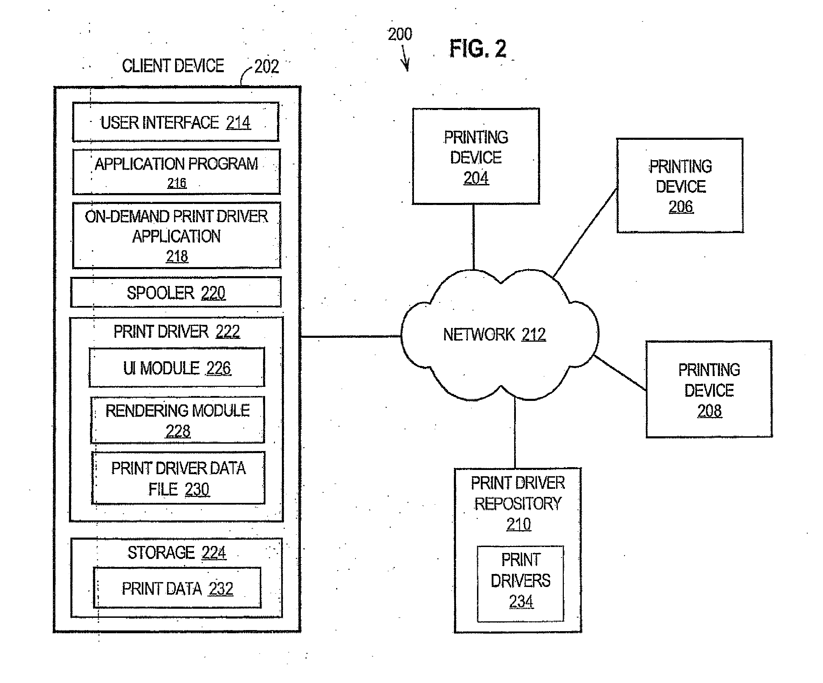

FIG. 2 is a block diagram that depicts an example on-demand print driver architecture 200, according to an embodiment of the invention. Architecture 200 includes a client device 202, printing devices 204, 206, 208 and a print driver repository 210, that are communicatively coupled to each other via a network 212. Network 212 may be implemented by any medium or mechanism that provides for the exchange of data between the various elements depicts in FIG. 2. Examples of network 212 include, without limitation, a network such as a Local Area Network (LAN), Wide Area Network (WAN), Ethernet or the Internet, or one or more terrestrial, satellite or wireless links. Network 212 may also provide secure communications between the various elements depicted in FIG. 2. The various elements depicted in FIG. 2 may also communicate with each other via one or more direct communications links that are not depicted in FIG. 2 or described herein for purposes of brevity.

Client device 202 may be any type of client device and the invention is not limited to any particular type of client device. Examples of client device 202 include, without limitation, a desktop computer, a laptop computer, a personal digital assistant (PDA), a mobile device and a telephony device. In the present example, client device 202 includes a user interface 214, an application program 216, an on-demand print driver application 218, a spooler 220, a print driver 222 and storage 224.

Printing devices 204, 206, 208 may be any type of device that is capable of processing print data and generating a printed version of an electronic document reflected in the print data. Examples of printing devices 204, 206, 208 include, without limitation, printers, network-enabled copy machines and multi-function peripherals (MFPs), and the approaches described herein are not limited to any particular type of printing devices 204, 206, 208. Embodiments of the invention are described herein in the context of four printing devices depicted in FIG. 2, but the approach is applicable to any number of printing devices disposed in the same or different physical locations. Client device 202 may provide print data to printing devices 204, 206, 208 in any format and according to any communications protocol, depending upon a particular implementation. For example, SNMP may be used.

User interface 214 may be implemented by any mechanism(s) and/or process(es) that allow for the exchange of information between client device 202 and users. Examples of user interface 214 include, without limitation, a display, such as a cathode ray tube (CRT) or liquid crystal display (LCD), and an input device, such as a keypad, touchpad, touch screen, keyboard or mouse, or any combination of displays and input devices.

Application program 216 may be any type of application that is capable of generating print data. Examples of application program 216 include, without limitation, a word processing program, a spreadsheet program, an email program or any other type of application.

On-demand print driver application 218 generates print drivers for printing devices on an on-demand basis as described in more detail hereinafter. On-demand print driver application 218 may be implemented as one or more processes, modules or components in computer hardware, computer software, or any combination of computer hardware and computer software. For purposes of explanation, on-demand print driver application 218 is depicted in the figures and described herein in the context of being implemented n client device 202, but the invention is not limited to this context and on-demand print driver application 218 may be implemented on other network elements. On-demand print driver application 218 is described in more detail hereinafter.

Print driver 222 may include a wide variety of modules and components, depending upon a particular implementation. In the example depicted in FIG. 1., print driver 222 includes a UI module 226, a rendering module 228 and a print driver data file 230. The print driver data file 230 is generated by the on-demand print driver application 218 and includes data that is used by the UI module 226 and the rendering module 228. One example of the data contained in the print driver data file 230 is a set of commands that implements both a set of basic printing device capabilities as well as current capabilities of a printing device. Print driver 222 may include other modules, elements and functionality not depicted in FIG. 2 or described herein for purposes of brevity, and the invention is not limited to the on-demand print driver application 218 generating a print driver 222 having any particular combination of modules and functionality. Rendering module 228 processes print data and generates translated print data that conforms to a format supported by an intended recipient printing device. For example, rendering module 228 may process print data 232 generated by a word processing application, e.g., application program 216, and generate translated print data that conforms to the postscript format, on the basis that the print data 232 is intended to be processed by a printing device that supports postscript.

Storage 224 may be implemented by any type of storage. Examples of storage 224 include, without limitation, volatile memory, such as random access memory (RAM) and non-volatile storage, such as one or more disks or flash memory. Client device 202 may include other mechanisms, modules, processes, etc., depending upon a particular implementation, that are not depicted in FIG. 2 or described herein for purposes of explanation. In FIG. 2, storage 224 is depicted as storing print data 232 for purposes of explanation only, but storage 224 may include various other types of data.

### III. FUNCTIONAL OVERVIEW

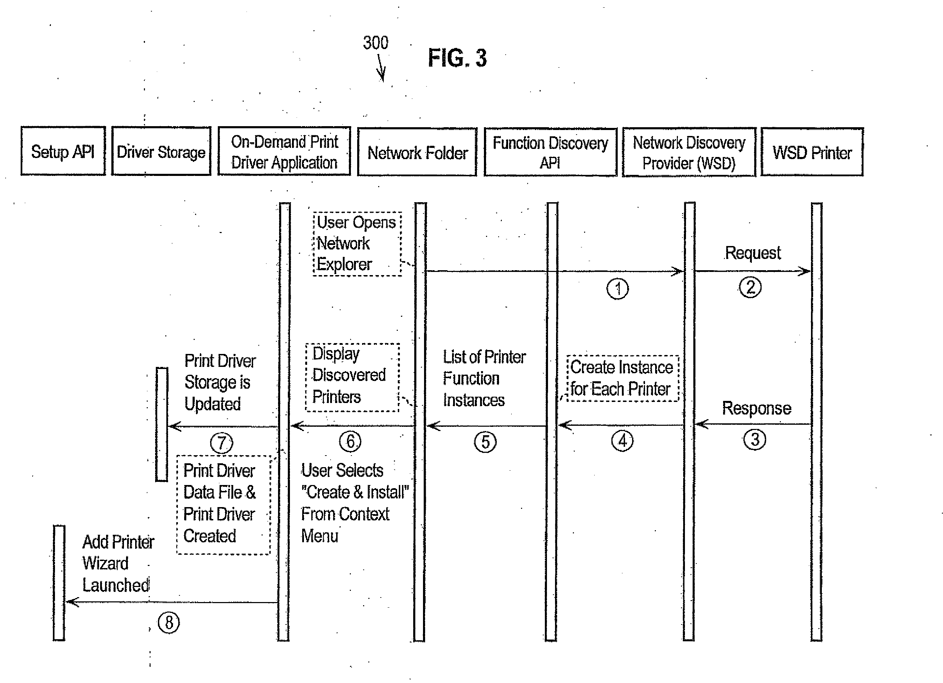

FIG. 3 is a state diagram that depicts an approach for generating and installing a print driver using an on-demand print driver application in the context of a windows-based operating system, according to one embodiment of the invention. As depicted in FIG. 3, the process starts when a user opens a network explorer utility from the network folder process. This causes the network folder to invoke a network discovery provider in Step 1 via a function discovery application program interface (API). In Step 2, the network discovery provider generates and transmits a discovery request to printers available on the network. In the present example, the network discovery provider conforms to the Web services device (WSD) standard and makes a WSD discovery request to WSD-enabled printers, for example in the form of a multicast message, but the invention is not limited to the WSD context.

In Step 3, the WSD printer generates and transmits to the network discovery provider a response to the request. In Step4, the network discovery provider forwards the response to the function discovery API. The function discovery API creates a function instance for each discovered printer and in Step 5, provides a list of printer function instances to the network folder process. The network folder process displays a list of discovered printers. In Step 6, the user selects a "Create & Install" option from a context menu for a particular discovered printer. The on-demand print driver application generates a print driver data file and a print driver for the particular printer and in Step 7, the print driver store is updated. In Step 8, the add printer wizard is launched and the print driver for the particular printer is installed.

### IV. ON-DEMAND PRINT DRIVER APPLICATION

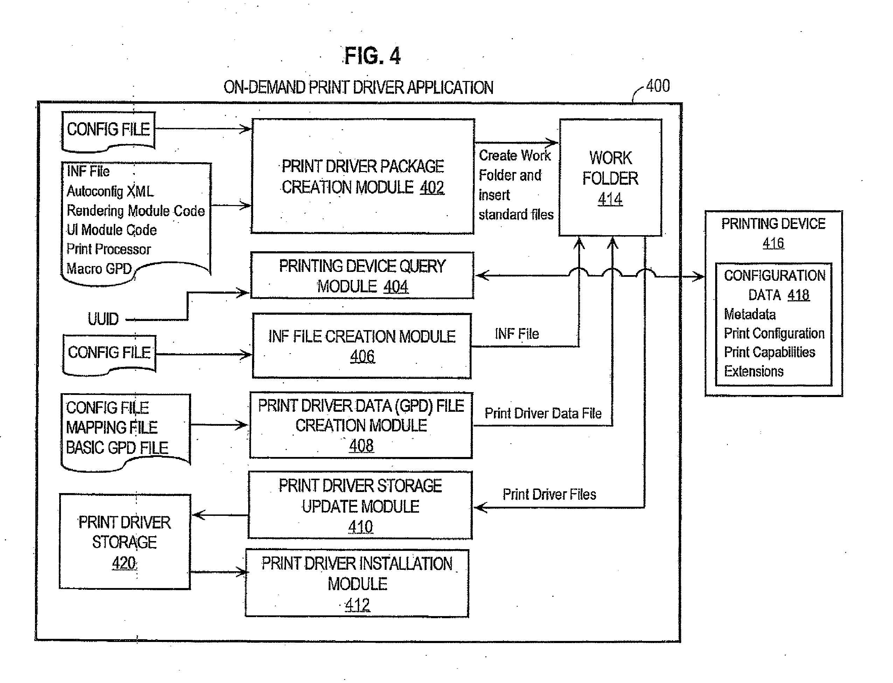

FIG. 4 is a block diagram that depicts an example implementation of an on-demand print driver application 400 according to one embodiment of the invention. In this example, on-demand print driver application 400 includes a print driver package creation module 402, a printing device query module 404, an INF file creation module 406, a print driver data (GPD) file creation module 408, a print driver storage update module 410 and a print driver installation module 412. The aforementioned modules may be implemented in computer hardware, computer software, or any combination of computer hardware and software, depending upon a particular implementation. On-demand print driver application 400 may include other modules, components and processes, depending upon a particular implementation, and the invention is not limited to on-demand print driver application 400 having the particular modules depicted in FIG. 4 and described herein. Each of the aforementioned modules is described in more detail hereinafter.

As described in more detail hereinafter, several of the modules of on-demand print driver application 400 use information obtained from a config file that contains detailed information for a creating a print driver. Table includes example contents of a config file. For purposes of explanation, the data contained in the example config file in Table is organized and labeled according to the different modules that use the config file. The config file may be any format, depending upon the requirements of a particular implementation, and the invention is not limited to the config file being in any particular format. Example formats include, without limitation, text, rich text and a markup language, such as XML.

### TABLE - Example Config File

Section used by Print Driver Package Creation Module and INF File Creation Module:

```
    <Signature value="$Windows NT$" />
              <DriverVersion value="05/18/2007,1.99" />
              <ManufacturerURL value="http://www.ricoh.com" />
              <PrinterProcessorName value="RicohPrint" />
              <PrintProcessorDLLName value="rippfd.dll" />
 <DriverDataFileName formula="MFG:F2;MDL:L5;(6).GPD" />
 <DriverDataFileExtraFile>
                   <ExtraFile value="RICONFIG.XML" />
                   <ExtraFile value="RIAFRES.DLL" />
                   <ExtraFile value="RIAFUI2.DLL" />
                   <ExtraFile value="RIAFCMAC.GPD" />
              </DriverDataFileExtra>
```

Section used by Print Driver (GPD) File Creation Module:

```
         <BasicINFFile value="RiHtINF.inf" />
 <ResourceMacrofile value="RIAFCMAC.GPD" />
              <CmdMacrofile value="RiHtCMD.GPD" />
              <BasicGPDFile value="RiHtGPD.GPD" />
              <mappingFile value="RiHtMap.xml" />
```

Data File Section-- contains driver attribute information that can be inserted into final print driver data file, such as whether the print driver is an XPS print driver or not:

```
 <DataFile>
 <GPDFileVersion value="123.456" />
 <ResourceDLL vale="PCLXL.DLL" />
 <Include value="RIAFCMAC.GPD" />
 <Include value="PCLXL.GPD" />
 <Include value="P6FONT.GPD" /> <PrintSchemaPrivateNamespaceURI
 value="" />
 <IsXPSDriver value="FALSE" />
 </DataFile>
```

### A. Print Driver Package Creation Module

The print driver package creation module 402 is configured to create a work folder 414 in which the print driver package is created. The term "package" is used to refer to a collection of data items that include executable code as well as data. The work folder 414 may be any type of temporary storage and does not have to be a "folder" type of data structure, although the term "folder" is used herein for purposes of explanation. According to one embodiment of the invention, the print driver package creation module 402 includes in the work folder 414 a set of standard data items that are used for multiple print drivers. In the present example, the config file of Table includes a "DriverDataFileExtraFile" tag that identifies the standard data items that are to be stored into the work folder 414. In the present example, these data items are data files that include another configuration file, which in FIG. 4 is identified as an autoconfig xml file, named "RICONFIG.XML", a rendering module named "RIAFRES.DLL", which is a rendering plug-in module embodied in a dynamic linked library, a UI module named "RIAFUI2.DLL", which his a UI plug-in module embodied in a dynamic linked library and a macro file named "RIAFCMAC.GPD". These files may be retrieved from print driver storage 420, or some other location, depending upon a particular implementation. In this example, the standard data files include a UI module and a rendering module that are the same across multiple print drivers. The print driver data file 230 provides the commands and behavior that are specific to a particular printing device. The print driver package creation module 402 is also configured to cause the INF file created by the INF file creation module 406 and the print driver (GPD) file created by the print driver data file module creation module 408 to be stored in the work folder 414.

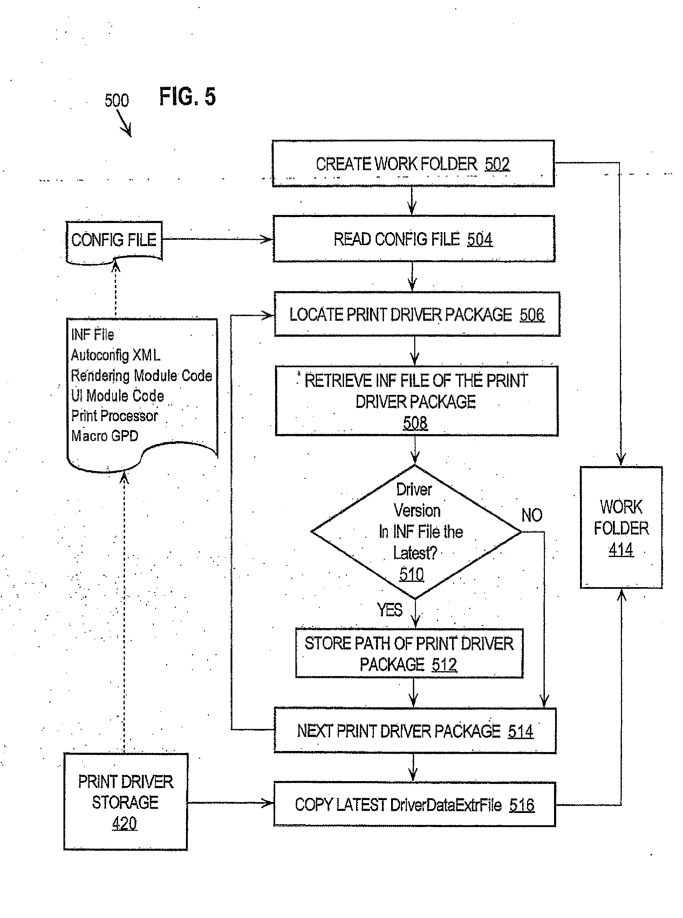

FIG. 5 is a flow diagram 500 that depicts some of the functions performed by the print driver package creation module 402 according to one embodiment of the invention. In step 502, the print driver package creation module 402 creates the work folder 414. In step 504, the print driver package creation module 402 reads the config file to determine the standard files that are to be included in the print driver. For example, referring again to Table, the standard files are identified by the "DriverDataFileExtraFile" tag. In step 506, the print driver package creation module 402 locates a print driver package, for example stored in print driver storage 420, that contains the identified standard files. In step 508, the print driver package creation module 402 retrieves the INF file of the print driver package and in step 510 determines whether the version of the print driver package, as indicated by the INF file, is the latest version. For example, the INF file may include a tag named "DriverVersion value" that indicates the version of the print driver package. If the print driver package is the latest version, then in step 512, the path of the print driver package is stored. Then, in step 514, or if in step 510 the print driver package is not the latest version, the next print driver package is evaluated. Steps 506-514 are repeated until all of the available print driver packages have been evaluated and the newest version identified. Once this process has been completed, then in step 516, the standard files contained in the latest version of the print driver package are retrieved from the print driver storage 420 and stored in the work folder 414.

### B. Printing Device Query Module

The printing device query module 404 is configured to retrieve configuration data 418 from the printing device 416. The configuration data specifies the capabilities of the printing device. In the present example, the configuration data includes metadata, print configuration data, print capabilities data and extensions data, which may be stored in any number of data files or any format. An explanation of this data is as follows:

1. Semantic Files (Semantic Metadata, Semantic PrintCapability, Semantic PrinterConfiguration and Semantic Default Print Ticket): contain the device information as per the semantic specification plus extensions for the feature/device.

Semantic Metadata provides printer's general information, in a standardized format:

```
 <wprt:PrinterMetadata>
              <wprt:ColorSupported>
 True
 </wprt:ColorSupported>
              <wprt:DeviceId>
 MFG:Ricoh;MDL:Aficio 3245C
 </wprt:DeviceId>
              <wprt:MultipleDocumentJobsSupported>
 True
 </wprt:MultipleDocumentJobsSupported>
              <wprt:PagosPerMinute>
 20
 </wprt:PagesPerMinute>
              <wprt:PagesPerMinuteColor>
 8
 </wprt:PagesPerMinuteColor>
               <wprt:PrinterInfo xml:lang="en-AU, en-CA, en-GB,
 en-US">
 Printer for use of Accounting only
 </wprt:PrinterInfo>
               <wprt:PrinterLocation xml:lang="en-AU, en-CA, en-
 GB, en-US">
 LA Campus - Building 3
 </wprt:PrinterLocation>
               <wprt:PrinterName xml:lang="en-AU, en-CA, en-GB,
 en-US">
 Accounting Printer in Copy Room 2
 </wprt:PrinterName>
          </wprt:PrinterMetadata>
```

Semantic PrintCapability and Semantic PrinterConfiguration defines all the physical features that current printer model can possibly support. Some of these features may be not installed currently. Any defined feature by Semantic PrintCapability and Semantic PrinterConfiguration are put into GPD file.

Semantic PrintCapability and Semantic PrinterConfiguration define a printer's physical features' information and the option information under each feature. This information includes the UI display name, default option of that feature, or whether this feature belongs to document property in UI or device property. Also, Semantic PrintCapability and Semantic PrinterConfiguration may define localized strings for different languages. A feature's UI display name is one of the cases that utilize the localized string definition.

Semantic PrintCapability and Semantic PrinterConfiguration do not define any command string for any option.

If Semantic PrintCapability and Semantic PrinterConfiguration do not define any feature, or they are missing during the query process, the print driver data (GPD) file creation program creates a print driver data (GPD) file without any physical features in it. Still, the final driver package created will still operate, that is, it provides UI and does rendering jobs.

2. Extensions Data: includes keywords that do not fit into Semantic keywords specific to the printing device, e.g., GPD/PPD/RPCS keywords. Also includes switches to include supported section from the basic GPD and a list of features for that printing device.

Unlike the Semantic files, which define the physical features a printer model supports, the extensions data defines some logical features that are inserted into the print driver data (GPD) file. Example logical features include, without limitation:
Support8CharPassword
SupportDocUiReplace
AutoConfig
SupportSecurePrint
SupportSamplePrint
SupportSecurePrint
SupportHoldPrint
SupportStoredPrint
SupportDocumentBox

The extensions data also contains a list of physical features current printer model supports, the order of this list will be transferred into the print driver data (GPD) file as important information for displaying these features in driver UI. Also, the complete list of features serves as a reference to instruct Creation program how many physical feature this printer supports, and go to Semantic files to find each of these features.

Features' UI constraints are defined inside the extensions file, and these constraints are included in the final print driver data (GPD) file.

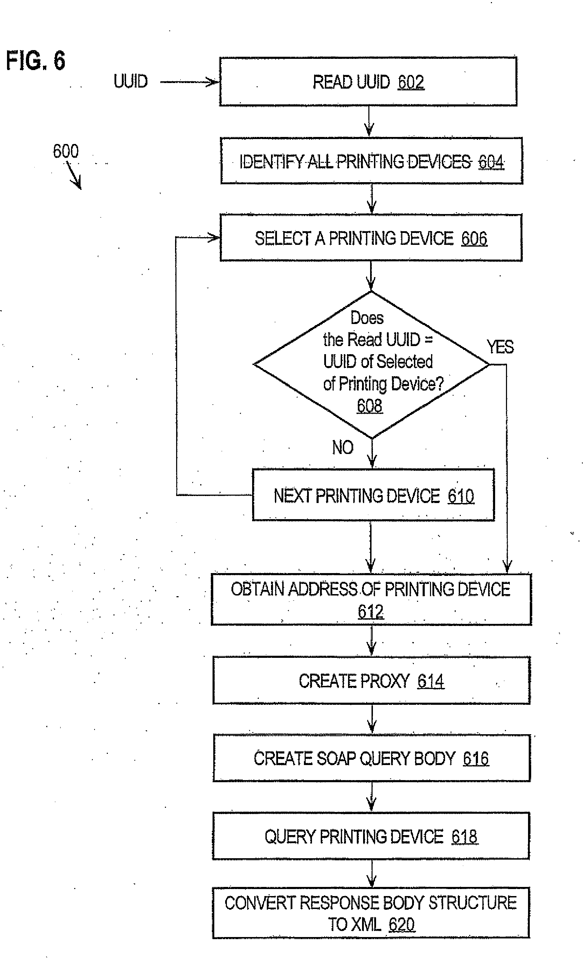

FIG. 6 is a flow diagram 600 that depicts example functionality of the printing device query module 404 in the context of using Web services to obtain the configuration data. In step 602, the printing device query module 404 reads the UUID for a printing device. In steps 604-610, the printing device query module 404 compares the read UUID to the UUID for each printing device known from the discovery process. Once the read UUID matches the UUID for a printing device, then in step 612, the printing device query module 404 obtains the address of the printing device. In step 614, the printing device query module 404 creates a proxy and in step 616, creates a SOAP query body. In step 618, the printing device query module 404 queries the printing device and receives a response that includes the configuration data. In step 620, the printing device query module 404 converts the body structure of the response to XML.

### C. INF File Creation Module

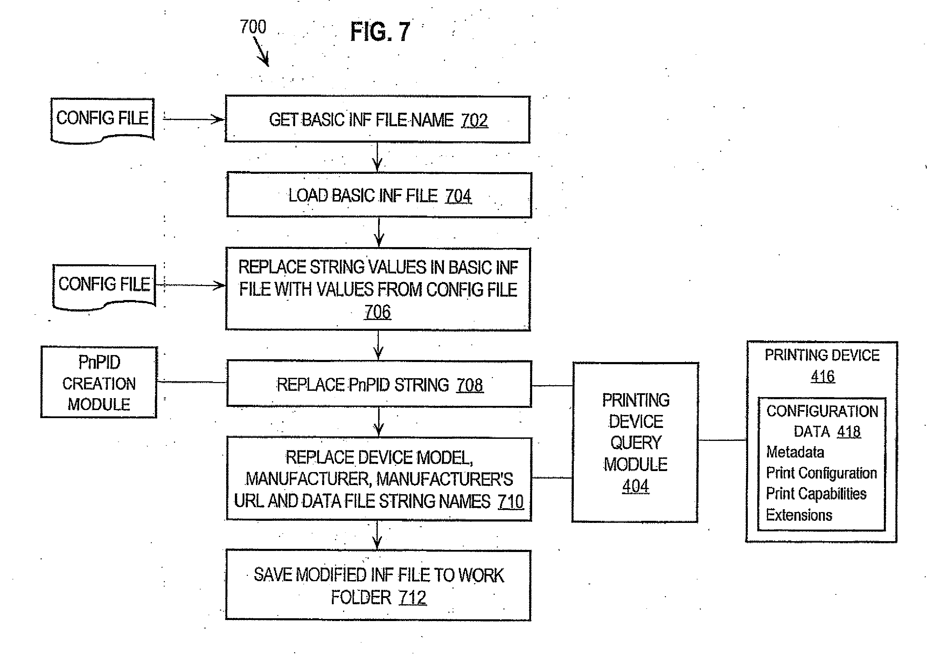

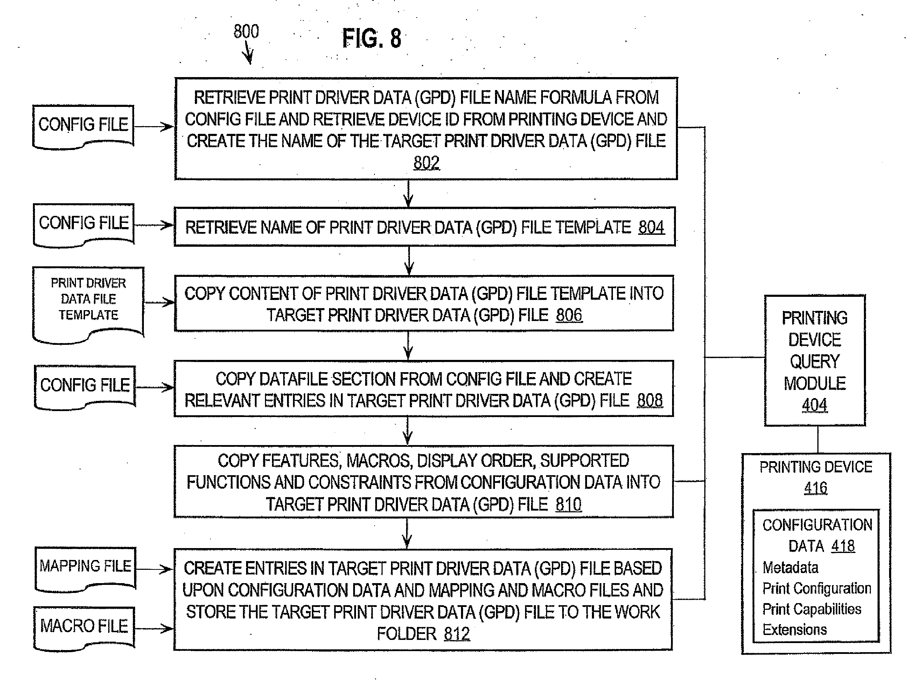

The INF File creation module 406 is configured to create an INF file that is included in the print driver files. The INF file used to install the print driver. FIG. 7 is a flow diagram 700 that depicts an approach for creating an INF file, according to one embodiment of the invention. In step 702, the INF File creation module 406 obtains the name of the basic INF file, i.e., an INF file template, from the config file. For example, the example config file in Table includes a tag named "BasicINFFile value" that specifies the name of a basic INF file. In step 704, the INF File creation module 406 loads the basis INF file. In step 706, string values contained in the basic INF file are modified based upon values from the config file. Also, other information from the config file may be added to the basic INF file. For example, the following steps may be performed:
1. Get Signature from Config File, add to target file's
   "[Version]" section: [Version]
   Signature="string from Config file"
2. Read OEM string definition from Config File, put the
   string to [Strings] section:
   [Strings] OEM="OEM string from config file"
3. Get DriverVersion string from Config File, put to [Version] section as "DriverVer=[driverVersion from Config]": [Version]
   Signature="string from Config file"
   DriverVer=[driverVersion string from config file]
4. Get Manufacture string in the format of "DeviceID:MFG" from Device Metadata. Add to INF file under [Manufacture] Section as:
   [Manufacturer] %Ricoh%=[ Manufacture string from Metadata]
5. Read ManufactureURL from Config File, add to INF file under section "[OEM URLS]", defined as:
   [OEM URLS]
   %Ricoh%=[ ManufactureURL string from Metadata]
6. Read a ModelName string from Device Metadata in the format of "MFG; MDL"
   In step 708, the PnPID string in the INF file is replaced with a new PnPID string generated by a PnPID creation module. In step 710, several other strings are replaced in the basic INF file. This may include, for example, replacing the device model, the manufacturer, the manufactuer's URL and data file name strings as follows:
7. Create a print driver data file (GPD) name according to current manufacture and model, calculation formula is {(DeviceID:MFG:F2)(DeviceID:MDL,L5)(6)
8. Under [manufacturer] section, create a INF command line in the format of
   ""ModelName"=[GDPNAME],PNPID":
   e.g., for a Ricoh printing device:
   "Ricoh Aficio 3245C PCL6"= [GPDNAME],RicohRicoh_Aficio_32C45C,
   Ricoh_Aficio_3245C_PCL6
9. Create a [GPDNAME] Section in target INF file:
10. Defines a DataFile inside [GPDName] Section:
   [RIC3245.GPD]
   DataFile=RIA32455.GPD
11. Add "DataSection=UNIDRV_DATA" under [GPDName] Section:
   [RIC3245.GPD]
   DataFile=RIA32455.GPD
   DataSection=UNIDRV_DATA
12. Read PrintProcessorName string from Config File
13. Get PrinterProcessorDLLName string from Config File
14. Create a INF command line under [GPDName] section:
   [RIC3245.GPD]
   DataFile=RIA32455.GPD
   DataSection=UNIDRV_DATA
   PrintProcessor=[ PrintProcessorName , PrinterProcessorDLLName]
15. Create a section called "Copy_File_GPDName", and then pack a list of files into this section, one file on each line. Most of the file names come from config file. The list contains:
   <OEMFiles>
   <Driverdata File>
   <Macrofile>
   <CmdMacrofile>
   <HelpFile>
   <DriverDataExtra>
   <GPD file name created>
16. Create a "SourceDisksFiles" section, list all the files in step 17 under this section:
   [SourceDisksFiles]
   <HelpFile>=1
   <Macrofile>=1
   Both steps 708 and 710 may include using information retrieved from printing device 416 via the printing device query module 404. In step 712, the modified INF file is saved to the work folder 414.
D. Print Driver Data (GPD) File Creation Module
   The print driver data (GPD) file creation module 408 is configured to create a print driver data file that is used by the UI module 226 and the rendering module 228. FIG. 8 is a flow diagram 800 that depicts an approach for creating a print driver data file, according to one embodiment of the invention. In step 802, the print driver data (GPD) file creation module 408 retrieves a print driver data file formula from the config file and retrieves the device ID from the printing device. For example, the example config file of Table includes a tag named "DriverDataFileName formula=" that specifies a formula used to determine the name of the target print driver data file. In the present example, the name of the target print driver data file is determined by the formula "MFG:F2;MDL:L5; ().GPD". This formula represents a concatenation of the first two characters of the manufactuer name ("MFG:F2"), the last five characters of the model name ("MDL:L5") and a constant ("()"). The file has an extension of ".GPD", meaning the printer driver data file is a generic printer driver data file. The print driver data (GPD) file creation module 408 uses the device ID and the formula to create the name of the target print driver data file, i.e., the print driver data file that will be included in the print driver. For purposes of explanation, embodiments of the invention are described herein in the context of the print driver data file included in the print driver being in the generic print driver, i.e., GPD format, but the invention is not limited to this context, and the print driver data file may be in a variety of formats, depending upon a particular implementation.
   In step 804, the print driver data (GPD) file creation module 408 retrieves the name of a print driver data file template from the config file. The print driver data file template serves as a starting point for the target print driver data file. More specifically, the print driver data file template contains data that is common to most, if not all, print driver data files, and includes, for example, basic commands required to create a print job. For example, the print driver data file template may include commands that support the spooler process in rendering a print job. The example config file of Table includes a tag named "BasicGPDFile value" that specifies the name of a GPD file template.
   In step 806, the print driver data (GPD) file creation module 408 copies the contents of the print driver data file template into the target print driver data file. Alternatively, the print driver data (GPD) file creation module 408 may include a directive to include the print driver data file template. In step 808, the print driver data (GPD) file creation module 408 copies the data file section from the config file and creates relevant entries in the target print driver data file. In step 810, the print driver data (GPD) file creation module 408 copies features, macros, display order, supported functions and constraints from the configuration data 418, e.g., included in the extensions data, and creates relevant entries in the target print driver data file.
   In step 812, the print driver data (GPD) file creation module 408 creates relevant entries in the target print driver data file based upon the print configuration, print capabilities, extensions and default printticket from and the printing device, as well as the mapping and macro files. The mapping file contains data that maps a display name from a semantic to a resource dll. This is particularly useful when a resource dll is localized by a vendor, e.g., Microsoft. For example, the mapping file list all possible features of a printing device and all possible options for each feature A particular printer model may define a subset of these features, and defines a subset of options for each feature. If a printer model carries a new feature, which may be not defined inside the mapping file, the print driver data (GPD) file creation program needs to obtain the display name of this feature from Semantic Printer XML files. Under this situation, the feature inside the created print driver data (GPD) file includes a fixed string as its display name. A vendor, e.g., Microsoft, may not provide localization for this particular feature in driver's UI. For each Semantic feature a printer model provides, the print driver data (GPD) file creation program reads through this mapping file and find the corresponding section for this feature. Next, the program reads this feature's GPD keyword name, and uses this name to create a GPD feature inside GPD file. Then, the print driver data (GPD) file creation module 408 reads current feature's resource ID from mapping file, and puts it under the GPD feature as its resource ID. This resource ID is used as this feature's display name in the UI. The print driver data (GPD) file creation module 408 does the same to each option defined by Printer Semantic capabilities inside the feature. A resource ID is used instead of a fixed string because vendors, such as Microsoft, provide a mechanism in their OS to translate these resource strings automatically to different languages. So that there is no need for vendor's printer driver to provide localized strings.
   The macro file defines a set of default command strings for printer feature options. Similar to printer driver data (GPD) file template, the contents of the macro file may be either inserted into the end of target print driver (GPD) data file, or as a separate file as part of the print driver package of files, referenced by an "*include" directive in the target print driver (GPD) file. The macro file provides symbolic GPD command strings for the print driver do perform PCL job rendering. In many circumstances, a command string defined in the macro file may not be a subset of a current printer model's command set. In this situation, the real command string for the current model is created based on a semantic ticket by a translation process. This happens after the printing device receives the rendered PDL data stream that contains a semantic ticket. The translation process may be implemented separate from the print driver and the on-demand print driver application 118 described here. Since semantic files do not provide any command string to GPD, the print driver has no way to know what current printer's command set is. Therefore, command strings provided by the macro file are used as a temporarily substitute for the real commands from the current printer model. Without this symbolic replacement, there is no PDL command inside the rendered PDL Job data, which can cause problems with an operating system. For example, a printer driver that does not include valid PDL commands may not be considered to be a valid PDL data package. Also, there may be situations where a user saves the PDL job data rendered by a print driver and then later sends the saved PDL job to a printing device from a different manufacturer. Without any PDL commands inside, the PDL job data will not accepted by any other printing devices. On the contrary, most PDL-based printing devices can partially accept valid PDL data, even though command set may be different.
E. Print Driver Storage Update Module and Print Driver Installation Module

The print driver storage update module 410 is configured to store print driver files from the work folder 414 into the print driver storage 420. This may include, for example, calling operating system routines to perform the transfer. The print driver installation module 412 is configured to install print drivers from the print driver storage 420. This may be accomplished, for example, using operating system software installation routines.

### V. IMPLEMENTATION MECHANISMS

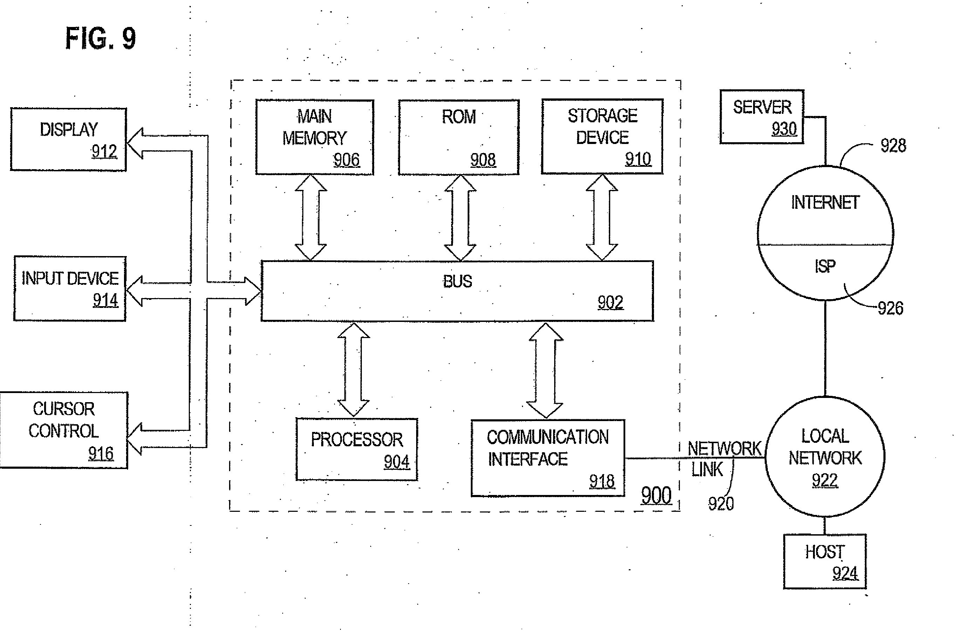

The approach described herein for generating on-demand print drivers may be implemented on any type of computing architecture or platform. Furthermore, the approach may be implemented in computer hardware, computer software, or any combination of computer hardware and computer software. For purposes of explanation, FIG. 9 is a block diagram that depicts an example computer system 900 upon which embodiments of the invention may be implemented. Computer system 900 includes a bus 902 or other communication mechanism for communicating information, and a processor 904 coupled with bus 902 for processing information. Computer system 900 also includes a main memory 906, such as a random access memory (RAM) or other dynamic storage device, coupled to bus 902 for storing information and instructions to be executed by processor 904. Main memory 906 also may be used for storing temporary variables or other intermediate information during execution of instructions to be executed by processor 904. Computer system 900 further includes a read only memory (ROM) 908 or other static storage device coupled to bus 902 for storing static information and instructions for processor 904. A storage device 910, such as a magnetic disk or optical disk, is provided and coupled to bus 902 for storing information and instructions.

Computer system 900 may be coupled via bus 902 to a display 912, such as a cathode ray tube (CRT), for displaying information to a computer user. An input device 914, including alphanumeric and other keys, is coupled to bus 902 for communicating information and command selections to processor 904. Another type of user input device is cursor control 916, such as a mouse, a trackball, or cursor direction keys for communicating direction information and command selections to processor 904 and for controlling cursor movement on display 912. This input device typically has two degrees of freedom in two axes, a first axis (e.g., x) and a second axis (e.g., y), that allows the device to specify positions in a plane.

The invention is related to the use of computer system 900 for implementing the techniques described herein. According to one embodiment of the invention, those techniques are performed by computer system 900 in response to processor 904 executing one or more sequences of one or more instructions contained in main memory 906. Such instructions may be read into main memory 906 from another computer-readable medium, such as storage device 910. Execution of the sequences of instructions contained in main memory 906 causes processor 904 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing data that causes a computer to operation in a specific manner. In an embodiment implemented using computer system 900, various computer-readable media are involved, for example, in providing instructions to processor 904 for execution. Such a medium may take many forms, including but not limited to, non-volatile media and volatile media. Non-volatile media includes, for example, optical or magnetic disks, such as storage device 910. Volatile media includes dynamic memory, such as main memory 906. Common forms of computer-readable media include, for example, a floppy disk, a flexible disk, hard disk, magnetic tape, or any other magnetic medium, a CD-ROM, any other optical medium, a RAM, a PROM, and EPROM, a FLASH-EPROM, any other memory chip or memory cartridge, or any other medium from which a computer can read.

Various forms of computer-readable media may be involved in carrying one or more sequences of one or more instructions to processor 904 for execution. For example, the instructions may initially be carried on a magnetic disk of a remote computer. The remote computer can load the instructions into its dynamic memory and send the instructions over a telephone line using a modem. A modem local to computer system 900 can receive the data on the telephone line and use an infra-red transmitter to convert the data to an infra-red signal. An infra-red detector can receive the data carried in the infra-red signal and appropriate circuitry can place the data on bus 902. Bus 902 carries the data to main memory 906, from which processor 904 retrieves and executes the instructions. The instructions received by main memory 906 may optionally be stored on storage device 910 either before or after execution by processor 904.

Computer system 900 also includes a communication interface 918 coupled to bus 902. Communication interface 918 provides a two-way data communication coupling to a network link 920 that is connected to a local network 922. For example, communication interface 918 may be an integrated services digital network (ISDN) card or a modem to provide a data communication connection to a corresponding type of telephone line. As another example, communication interface 918 may be a local area network (LAN) card to provide a data communication connection to a compatible LAN. Wireless links may also be implemented. In any such implementation, communication interface 918 sends and receives electrical, electromagnetic or optical signals that carry digital data streams representing various types of information.

Network link 920 typically provides data communication through one or more networks to other data devices. For example, network link 920 may provide a connection through local network 922 to a host computer 924 or to data equipment operated by an Internet Service Provider (ISP) 926. ISP 926 in turn provides data communication services through the world wide packet data communication network now commonly referred to as the "Internet" 928. Local network 922 and Internet 928 both use electrical, electromagnetic or optical signals that carry digital data streams.

Computer system 900 can send messages and receive data, including program code, through the network(s), network link 920 and communication interface 918. In the Internet example, a server 930 might transmit a requested code for an application program through Internet 928, ISP 926, local network 922 and communication interface 918. The received code may be executed by processor 904 as it is received, and/or stored in storage device 910, or other non-volatile storage for later execution.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A computer-implemented method for generating a print driver, the computer-implemented method comprising:
an on-demand print driver application querying a printing device for configuration data that specifies current capabilities of the printing device;
the on-demand print driver application receiving the configuration data from the printing device;
the on-demand print driver application generating a print driver data file based upon both a specified set of common printing device capabilities that are common to multiple printing devices and the current capabilities of the printing device specified by the configuration data; and
the on-demand print driver application generating a print driver for the printing device that includes the print driver data file, a user interface module and a rendering module, wherein both the user interface module and the rendering module are common to the multiple printing devices.

2. The computer-implemented method as recited in Claim 1, further comprising generating and including in the print driver data file a set of commands that implements the set of basic printing device capabilities and the current capabilities of the printing device specified by the configuration data.

3. The computer-implemented method as recited in Claim 1, further comprising generating and including in the print driver an INF file that contains data and instructions used to install the print driver.

4. The computer-implemented method as recited in Claim 3, wherein generating the INF file includes:
copying from a configuration file and storing into the INF file a set of strings with a set of default string values that indicate default values of a set of printing device characteristics, and
and updating, based upon the configuration data, one or more of the default string values with values that reflect the characteristics of the printing device.

5. The computer-implemented method as recited in Claim 3, wherein the INF file includes a list of files to be included in the print driver.

6. The computer-implemented method as recited in Claim 1, wherein generating the print driver data file includes:
retrieving from a print driver data file template a set of common command strings that correspond to the set of common printing device capabilities used by the multiple printing devices, and
including the set of common command strings in the print driver data file.

7. The computer-implemented method as recited in Claim 6, further comprising for one or more capabilities of the printing device that are not included in the set of common printing device capabilities,
using one or more command strings from the set of one or more common command strings as temporary command strings for the one or more capabilities, and
storing the one or more command strings in the print driver data file and indicating in the print driver data file that the one or more command strings are temporary command strings.

8. An apparatus (200) for generating a print driver, the apparatus comprising a memory storing instructions which, when processed by one or more processors, causes:
an on-demand print driver application (218) querying a printing device (204, 206, 208) for configuration data that specifies current capabilities of the printing device;
the on-demand print driver application receiving the configuration data from the printing device;
the on-demand print driver application generating a print driver data file (230) based upon both a specified set of common printing device capabilities that are common to multiple printing devices and the current capabilities of the printing device specified by the configuration data; and
the on-demand print driver application generating a print driver (222) for the printing device that includes the print driver data file, a user interface module (226) and a rendering module (228), wherein both the user interface module and the rendering module are common to the multiple printing devices.

9. The apparatus as recited in Claim 8, further comprising one or more additional instructions which, when processed by the one or more processors, causes generating and including in the print driver data file a set of commands that implements the set of basic printing device capabilities and the current capabilities of the printing device specified by the configuration data.

10. The apparatus as recited in Claim 8, further comprising one or more additional instructions which, when processed by the one or more processors, causes generating and including in the print driver an INF file that contains data and instructions used to install the print driver.

11. The apparatus as recited in Claim 10, wherein generating the INF file includes:
copying from a configuration file and storing into the INF file a set of strings with a set of default string values that indicate default values of a set of printing device characteristics, and
and updating, based upon the configuration data, one or more of the default string values with values that reflect the characteristics of the printing device.

12. The apparatus as recited in Claim 10, wherein the INF file includes a list of files to be included in the print driver.

13. The apparatus as recited in Claim 8, wherein generating the print driver data file includes:
retrieving from a print driver data file template a set of common command strings that correspond to the set of common printing device capabilities used by the multiple printing devices, and
including the set of common command strings in the print driver data file.

14. The apparatus as recited in Claim 13, further comprising one or more additional instructions which, when processed by the one or more processors, causes for one or more capabilities of the printing device that are not included in the set of common printing device capabilities,
using one or more command strings from the set of one or more common command strings as temporary command strings for the one or more capabilities, and
storing the one or more command strings in the print driver data file and indicating in the print driver data file that the one or more command strings are temporary command strings.
